# EUROPEAN PATENT SPECIFICATION

(11) **EP 2 523 901 B1**
(45) Date of publication and mention of the grant of the patent: **06.09.2017**
(21) Application number: 11707220.7
(22) Date of filing: 14.01.2011
(51) Int. Cl.: C01B 25/37, C01B 25/45, C09D 5/08, C09K 21/04, C09D 1/00, C09D 5/18, C23F 11/18

(54) **IRON PHOSPHATE COMPOSITION AND METHOD FOR PREPARING AND USE THEREOF**
EISENPHOSPHATZUSAMMENSETZUNG SOWIE VERFAHREN ZU IHRER HERSTELLUNG UND VERWENDUNG
COMPOSITION DE PHOSPHATE DE FER ET PROCÉDÉ POUR LA PRÉPARATION ET L'UTILISATION DE CELLE-CI

(30) Priority: 15.01.2010 EE 201000005
(43) Date of publication of application: 21.11.2012
(73) Proprietor: Uusen, Tarvi, 50707 Tartu (EE); Paukson, Aleksandr, 76610 Keila (EE)
(72) Inventor: PAUKSON, Aleksandr, EE-76610 Keila (EE)
(74) Representative: Koppel, Mart Enn
(86) International application number: PCT/IB2011/050178
(87) International publication number: WO 2011/086526

(56) References cited:
- EP-A1- 1 854 356
- DE-A1- 2 302 216
- US-B1- 6 350 474

## Description

### FIELD OF THE INVENTION

The invention relates to an iron phosphate composition, to a method of manufacturing such composition and using the composition for high temperature impregnating solutions, paints, emulsions, pastes, putties for protecting surfaces of wood, metal, stone, concrete, paper, plastic, textiles, etc as well as in chemical industry for manufacturing reactants. The composition can be used in industry, agriculture and forestry as fire resistant, anticorrosive, decorative or antiseptic agent. The obtained aqueos solution solidifies slowly at lower temperatures (e.g., at normal room temperature). However, at higher temperatures the composition solidifies quickly.

### BACKGROUND OF THE INVENTION

US patent US6350474 describes phosphate composition comprising (stated in parts by weight): orthophosphoric acid (85% solution) about 100, iron oxide from about 20 to about 41, metal powder from about 0.5 to about 2.5 and water from about 30 to about 70. This phosphate composition is aqueous solution with cold solidification capacity. Metal powder is aluminium, magnesium, zinc, calcium, cobalt, ytrium, nickel or scandium. The temperature rises during exothermal reaction to 40-50°C. Metal powder content above 2.5 part by weight will increase the temperature to 120-130°C, by which dissolved particles stick together and ortophosphate anion will turn into polyphosphate. Heat released in the exothermal reaction is enough for dissolution of iron oxide and metal powder in 2 hours. The output of the reaction represents transparent, brownish, sticky liquid with density of 1.5 kg/m³. Such non-toxic non-carcinogenic solution is produced ecologically safely and is used for coating wood, metal, concrete, textiles and paper for increasing fire resistance of these. The amount of the solution for 1 square meter is 0.2 liters. The solution does not damage the surface, does not alter its color and material quality. The solution obtained is used as anticorrosive solution for removing the rust and for protecting against further rusting. The solution is used also for producing paints and ceramic materials. Because of its antimicrobic and antibacterial properties the phosphate composition can be used in medicine, agriculture and forestry.

Estonian utility model EE00444U1 describes producing of phosphate composition, having the following ratio of ingredients in parts by weight: orthophosphoric acid 100, iron oxide 20-41, metal powder 0.5-2.5, and water 30-70. To the mixture is added ethyl alcohol or glycerine 0.05-0.2 parts by weight for increasing the stability and wetting ability. Aluminium powder is used.

Estonian utility model EE00549U1 describes surface protecting material, having the following ratio of ingredients in parts by weight: orthophosphoric acid 60-80, iron oxide 50-60, metal powder 5-10, and water 40-60. The surface protecting material includes additionally aluminium nitrate 7-10 parts by weight and copper sulphate 7-10 parts by weight. Fe₂O₃, TiO₂ and MnO₂ are added as pigments. If the surface of e.g. wood is treated with such surface protecting material, the fire resistance increases and putrefaction decreases. This will guarantee long stability of wood. Long-time persistence of other materials, for example paper, textiles, metal, is guaranteed in the same way.

### SUMMARY OF THE INVENTION

The present invention relates to a new iron phosphate composition and its synthesis using exothermal process. For improving physical properties and for increasing stability calcium and citric acid are added into the composition. The iron phosphate composition of the present invention has better stability and better fire resistance compared to known compositions and has anticorrosive, antibacterial and antiseptic properties. No organic solvents such as ethyl alcohol and glycerol were used.

The method for preparing of iron phosphate composition according to the invention comprises: pouring orthophosphoric acid into reactor, switching on the mixer, adding iron(III)oxide, adding metal powder, keeping the temperature in the range suitable for reaction (preferably 120-130°C) by adding water and adding calcium and citric acid. All the mentioned components are taken in parts by weight: orthophosphoric acid (85% solution) 100, iron(III)oxide 10-19, metal powder (Al, Zn, Mg) 1.1-1.8 (preferably 1.1 to 1.6), water 8-30 (preferably 10-30), calcium 1-3 (preferably 1-2) and citric acid 0.5 - 1.8 (preferably 0.5 - 1.5). Compared to background art, the product is prepared at higher temperature and substantially less water is added during the exothermal preparation process.

For the mixing of the components a continuously rotating mixer reactor with blades, made, e.g. from stainless steel, is used. The reactor has inside ventilation and its volume depends on desired amount and purpose of the composition.

### DETAILED DESCRIPTION OF THE INVENTION

The method for preparing of iron phosphate composition according to the invention comprises: pouring orthophosphoric acid into a mixing reactor, switching on the mixer, adding iron(III)oxide, adding metal powder, keeping the temperature in the range suitable for the reaction (preferably 120-130°C) by adding water and adding calcium and citric acid. All the mentioned components are taken in ratio in parts by weight: orthophosphoric acid 100, iron(III)oxide 10-19, metal powder (Al, Zn, Mg) 1.1 to 1.8, preferably 1.1 to 1.6, water 8-30, preferably 10 - 30, calcium 1-3, preferably 1-2, and citric acid 0.5 - 1.8, preferably 0.5 - 1.5.

For the mixing of the components a continuously rotating mixer reactor with blades, made, e.g. from stainless steel, is used. The reactor has inside ventilation and its volume depends on desired amount and purpose of the composition.

Due to exothermic reaction the temperature increases to and is kept preferably from 120 to 130°C for 1 to 2 hours. The reaction time depends on volume of the reactor. After the reaction is finished, enough water is added to the concentrate to make a product with desired properties; which is left into reactor for sufficient time (e.g., for several hours) to settle, then it is pored out of the reactor.

The temperature range between 120 and 130°C is enough to dissolve iron oxide, metal powder and additives in less than two hours. The dissolved particles do not stick and do not form polyphosphates at this temperature when reactor with constantly rotating blades is used and because of the ratio of ingridients. On inflammation, the compound does not evaluate smoke, CO₂ and other dangerous compounds in an amount harmful for humans and environment.

Increasing the amount of iron(III)oxide in above mentioned formula over the upper limit (i.e., over 19 parts by weight provided the amount of other ingridients remain unchanged) will cause rapid decomposition and short stability of the iron phosphate composition (as short as few weeks depending on the temperature).

Decreasing the amount of iron(III)oxide in above mentioned formula below the lower limit (i.e., below 10 parts by weight provided the amount of other ingridients remain unchanged) will result in lower fire resistance with evolution of smoke and CO₂ in large quantities.

The studies are carried out with products derived from the concentrate to determine fire resistance, anticorrosive, antiseptic properties. Compositions with different content in parts by weight have been used in the following tests about flammability and burning of impregnated wood: TUV NORD (Estonia, test protocol no TM-17/08), TUV SUD (Singapore, test report no S08ME C03108/OKN), EXOVA (Canada test ASTM E 84 SBC Report 09-002-716 9/2009) and Forest and Wood Products Research Development Institute, Jelgava, Latvia (test report no 220/009). As result of very good compounds ratio in parts by weight and results of tests gave the highest class (A2/B-s1-d0) B-s1-d0 and it has been delivered certificate no 377-072/09 based on standard document EN 13501-1:2007 (EN13823:2002 and EN ISO 11925-2:2002) for impregnating of wood construction against flammability and fire spreading.

The studies carried out in Estonian University of Life Sciences Institute of Veterinary medicine and animal scienses in Department of Food Science and Hygiene confirmed antiseptic properties of composition. During studies there have been observed rapid decrease of bacterial colonies.

As result of chemical attachment reaction it is obtained non-transparent, dark brown liquid of iron phosphate composition with dencity of 1.83-1.85 kg/m³. Solution of iron phosphate composition obtained in this way is expected to be stable for 5 years.

Solution of iron phosphate composition obtained is not toxic as inorganic compounds of 5 valence phosphorus are harmless for human. The production of solution of iron phosphate composition is ecologically safe.

The main purpose of using the solution of iron phosphate composition is coating wood, metal, plastic, paper, stone, concrete, textiles, etc or impregnating materials that can be impregnated, mixing with other components for achieving fire resistance and for giving antiseptic properties to treated materials.

The amount of solution of iron phosphate composition for treating one square meter is around 200 to 400g.

The surfaces are treated with vacuum impregnation, paintbrush, sprayer or paint roller 2-3 times, while drying time is 2-48 hours.

According to the present invention there is provided coating of different surfaces with solution of iron phosphate composition with cold solidification capacity without thermal treatmet as well as with thermal treatment at temperature from 50 until 350° C by using resins or adhesives.

### 1. Solution for improving fire resistance

Fire resistant and fire protective coating agent is transparent, light pink aqueous solution with density of 1.1 - 1.20 kg/m³, which forms non-flammable layer on the treated surface of material. By adding non-flammable resins and adhesives 5-35%, elastic or hard, film forming layer (for example white, yellow, mat, with shine) is created with density of 1.15-1.50 kg/m³, which is fire barrier and can not be washed out.

### 2. Anticorrosive solution

Anticorrosive solution with density of 1.40-1.50 kg/m³ is used for removing or for keeping off the rust by adding first layer, after that the rust is removed. Next, the second layer is added for forming protecting layer on surface, which can be coated later with the same solution or suitable paint. 5-35% resins or adhesives can be added by mixing for obtaining the coating as needed.

### 3. Powder for binding and for making non-flammable plastics

Powder is made by evaporating of concentrate or by crystallization and adding organic solvents. By drying and crushing of the material fine, dispersed, light gray powder is prepared with 80% of particles with size of <0.003 mm and 10% of particles with size of >0.05 mm. Depending of the desired characteristic of the plastic 8-25% of powder is added on melt temperature (before molding) by mixing and for giving the shade to plastic.

### 4. Emulsion

The emulsion is prepared by mixing of the concentrate with water in ratio 1:4 and by adding to this solution 2-5% sodium hydroxide (NaOH) or potassium hydroxide (KOH). The emulsion is prepared for coating metal or stone, for forming upper layer in protecting film against enviromental damage.

### 5. Putty

Putty is used also for fire protection and against corrosion of metal, wood, stones of the building constuctions. It is also used for restoring fire resistant coatings, for binding chamotte stoves and chamotte lining in heating elements. Because of high fire resistance (1800° C) it is suitable for high-temperature heating elements of kettles, glassmelters etc., also for conventional stoves and fireplaces. It prevents overheating and annealing of metal.

### Usage

Enough water is added to the composition so that the composition would stay well on the surfase to be treated. Putty should be put on surface as 1-2 mm layer using putty spade or other suitable applicator. It can be applied directly on rust.

It is possible to give to the surface shade and to treat it with abradant. The drying time is 24 hours at 18° C.

The composition of putty is as following (% by weight): sand 10%, argillaceous 56%, Al₂O₃ 12%, 20% solution of iron phosphate 22%.

Solutions, powders, emulsions and putties are kept in closed plastic or glass ware.

### Examples

Examples of the composition (amounts in parts of weight) are presented in Table 1.

**Table 1**

| | Orthophosphoric acid (85%) | Iron(III) oxide | Al powder | Water | Ca | Citric acid | Time, h | Temperature, °C | Stability |
|---|---|---|---|---|---|---|---|---|---|
| 1 | 100 | 10 | 1.1 | 8 | 0.5 | 0.5 | 2-4 | 140 to 150 | stable |
| 2 | 100 | 10 | 1.1 | 10 | 0,5 | 0.5 | 2-4 | 120 to 130 | stable |
| 3 | 100 | 11 | 1.2 | 15 | 0.8 | 0.7 | 2-4 | 120 to 130 | stable |
| 4 | 100 | 13 | 1.3 | 20 | 1 | 1 | 2-4 | 120 to 130 | stable |
| 5 | 100 | 15 | 1.4 | 20 | 1.3 | 1 | 2-4 | 120 to 130 | stable |
| 6 | 100 | 17 | 1.5 | 25 | 1.8 | 1.3 | 2-4 | 120 to 130 | stable |
| 7 | 100 | 19 | 1.6 | 30 | 2 | 1.5 | 2-4 | 120 to 130 | stable |
| 8 | 100 | 19 | 1.8 | 30 | 3 | 1.8 | 2-4 | 120 to 130 | stable |

### Examples 1 to 8

Into continuously rotating mixer reactor is poured 100 kg of orthophosphoric acid (85% water solution) and to which is added (in the amounts as shown in Table 1) iron(III)oxide, metal powder and water while stirring continuously. Calcium and citric acid are added after 1 hour. Reaction time is from 2 hours up to 4 hours.

Even though the solution according to example 1 is stable, the temperatuse of the reaction may rise too high, the process may become uncontrollable and there is a likelihood of the components settling out and solidification of the solution.

Yielded mixture of iron phosphates does not need sedimentation. The composition is ready for use. Water, additives, pigments, etc are added for obtaining a product with desired properties.

## Claims

1. Iron phosphate composition comprising a solution of an orthophosphoric acid, an iron(III)oxide, a metal powder and water, **characterized in that** the composition comprises calcium and citric acid.

2. Composition according to claim 1, wherein the amount of the ingredients in the solution in parts by weight is as following:
| | |
|---|---|
| orthophosphoric acid 85% solution | 100 |
| iron(III)oxide | 10 - 19 |
| metal powder | 1.1 - 1.8 |
| water | 8 - 30 |
| calcium | 1 - 3 |
| citric acid | 0.5 - 1.8. |

3. A composition according to claim 2, comprising metal powder from 1.1 to 1.6 in parts by weight.

4. A composition according to claims 1 to 3, wherein said metal powder is selected from the group consisting of Al, Zn and Mg.

5. A composition according to claims 1 to 3, wherein said metal powder is Al powder.

6. Method for producing iron phosphate composition as in claims 1 to 5, comprising pouring orthophosphoric acid 85% solution into a reactor, adding iron(III)oxide, and for controlling temperature necessary for reaction and for neutralizing acidity adding water, metal powder, citric acid and calcium within 1-2 hours.

7. Use of the composition as claimed in any one of the claims 1 to 5 for preparing reactants, for coating and impregnating materials selected from a group of wood, metal, plastic, paper, stone, concrete and textiles to provide fire resistance and antiseptic properties and wherein said material is coated with said composition using vacuum impregnation, paintbrush, sprayer or paint roller at least one time.

8. Use of the composition as claimed in any of the claims 1 to 5 for preparing fire protection solutions and anticorrosive solutions, emulsions, putties and plastics.

9. Use of the composition as claimed in claim 8, wherein the fire protection solution comprises 5-35% non-flammable resins or adhesives.

10. Use of the composition as claimed in claim 7 for covering metals with anticorrosive solution comprising 5-35% non-flammable resins or adhesives, wherein covering a first layer for transforming rust and covering a second layer for forming protecting layer on surface.

11. Use of the composition as claimed in claim 8 for preparing a powder by evaporating or by crystallization the composition and by adding organic solvents to powder and drying and crushing it into powder with up to 80% particles with size of <0.003 mm and up to 10% particles with size of> 0.05 mm and adding 8-25% of such powder into plastic on melt temperature before molding.

12. Use of the compositions as claimed_in claim 7 for providing a layer on said material against enviromental damage by diluting the composition with water in ratio 1:4 by weight and adding 2 to 5% solution of sodium hydroxide or potassium hydroxide.

13. Use of the compositions as claimed in claim 7 for preparing a putty for providing or restoring fire resistant coatings, for binding chamotte stones and chamotte lining in heating elements as kettle, glassmelter and home stoves and fireplaces, as it prevents overheating and anneal of metal.

14. Use of the compositions as claimed in claim 13 wherein composition of the said putty is as following (% by weight):
| | |
|---|---|
| sand | 10%, |
| argillaceous | 56%, |
| Al₂O₃ | 12%, |
| 20% solution of said composition | 22% |
and distribution of particles in putty is as following:
< 0.4 mm - 1%
< 0.09 mm - 2%
and the method comprises adding enough water to allow the putty to be applied on the surface to be treated.

15. A method according to claim 6, comprising preparing the composition using exothermic reaction at the temperature from 120 to 130°C and preparing a powder by evaporating the concentrate or crystallizing and adding organic solvents to powder and drying and crushing it into a powder with about 80% particles with size of <0.003 mm and 10% particles with size of > 0.05 mm, which is chemically uniform and hydroscopic.

## Patentansprüche

1. Eisenphosphate Zusammensetzung, die eine Lösung der Ortophoshosäure, Eisen(III)oxid, Metallpulver und Wasser enthält, **dadurch gekennzeichnet, dass** die Zusammensetzung Calcium und Citronensäure enthält.

2. Zusammensetzung nach Anspruch 1, worin die Menge der Zutaten in der Lösung in Gewichtsteilen wie folgt sind:
| | |
|---|---|
| Ortophoshosäure 85% Lösung | 100 |
| Eisen(III)oxid | 10 - 19 |
| Metallpulver | 1.1 - 1.8 |
| Wasser | 8 - 30 |
| Calcium | 1 - 3 |
| Citronensäure | 0.5 - 1.8. |

3. Zusammensetzung nach Anspruch 2, umfassend Metallpulver von 1.1 bis 1.6 Gewichtsteilen.

4. Zusammensetzung nach den Ansprüchen 1 bis 3, worin das genannte Metalpulver aus der Gruppe bestehend aus Al, Zn und Mg gewählt ist.

5. Zusammensetzung nach Ansprüchen 1 bis 3, worin das genannte Metalpulver Al Pulver ist.

6. Verfahren zur Herstellung einer Eisenphosphate Zusammensetzung nach den Ansprühen 1 bis 5, umfassend Giessen von Ortophoshosäure 85% Lösung in einen Reaktor, Zugabe von Eisen(III)oxid und zum Regeln der für die Reaktion notwendige Temperatur und zur Neutralisation Säuregrad Zugabe von Wasser, Metallpulver, Citronensäure und Calcium während 1-2 Stunden.

7. Verwendung der Zusammensetzung nach irgendwelche von Ansprühen 1 bis 5 zur Herstellung von Reaktanten für Beschichtung und Imprägnierung von Materials gewählt aus der Gruppe von Holz, Metall, Kunststoff, Papier, Stein, Beton und Textilien um Feuerbeständigkeit und antiseptische Eigenschaften bereitzustellen, und wobei das genannte Material unter Verwendung Vakuumimprägnierung, Pinsel, Sprüher oder Farbroller mit der genannten Zusammensetzung mindenstens einmal beschichtet wird.

8. Verwendung der Zusammensetzung nach irgendwelche von Ansprühen 1 bis 5 zur Herstellung von Brandschutzlösungen und Korrosionschutzlösungen, Emulsionen, Spachtelmassen und Kunststoffen.

9. Verwendung der Zusammensetzung nach Anspruch 8, worin Brandschutzlösung 5-35% nicht brennbare Harze oder Klebstoffe enthält.

10. Verwendung der Zusammensetzung nach Anspruch 7 für Beschichtung von Metallen mit Korrosionschutzlösung, die 5-35% nicht brennbare Harze oder Klebstoffe enthält, worin Oberfläche mit erstes Schicht beschichtet wird zur Umwandlung von Rust und mit zweiter Schicht um die Schutzschicht auf der Oberfläche zu bilden.

11. Verwendung der Zusammensetzung nach Anspruch 8 zur Herstellung von Pulver durch Verdampfen oder durch Kristallisatsion der Zusammensetzung und durch Zugabe von organischen Lösungsmitteln zu Pulver und durch Trocknen und Zerkleinern zu einem Pulver, worin bis zu 80% der Teilchen eine Grösse von <0.003 mm und bis zu 10% der Teilchen eine Grösse von > 0.05 mm aufweist, und durch Zugabe von 8-25% dieses Pulvers ins Kunststoff bei Schmelztemperatur vor dem Formen.

12. Verwendung der Zusammensetzung nach Anspruch 7 zur Bereitstellung einer Schicht auf dem genannten Material gegen Umweltschäden durch Verdünnen der Zusammensetzung mit Wasser im Verhältnis 1:4 bezogen auf das Gewicht und durch Zugabe von 2 bis 5%-iger Lösung von Natriumhydroxide oder Kaliumhydroxide.

13. Verwendung der Zusammensetzung nach Anspruch 7 zur Herstellung Spachtelmassen zur Bereitstellung oder Wiederherstellung von feuerfesten Beschichtungen, zum Binden Schamottsteine und Schamottverkleidungen in Heizelementen, wie Kessel, Glasöfen und Haushalts Öfen und Kamine, da es Überhitzung und Glühen von Metallen verhindert.

14. Verwendung der Zusammensetzung nach Anspruch 13, worin Zusammensetzung der genannten Spachtelmasse (in Gewichts-%) wie folgt ist:
| | |
|---|---|
| Sand | 10%, |
| argillaceous | 56%, |
| Al₂O₃ | 12%, |
| 20%-ger Lösung der genannten Zusammensetzung | 22% |
und die Verteilung der Teilchen in Spachtelmasse wie folgt ist:
< 0.4mm - 1%
< 0.09 mm - 2%
und das Verfahren enthält Zugabe ausreichendes Wasser , damit die Spachtelmasse auf die zu behandelnde Oberfläche aufgetragen werden kann.

15. Verfahren nach Anspruh 6, umfassend die Herstellung der Zusammensetzung unter Verwendung einer exothermen Reaktion bei einer Temperatur von 120 bis 130 °C, und Herstellung von Pulver durch Verdampfen oder durch Kristallisatsion des Konzentrats und durch Zugabe von organischen Lösungsmitteln zu Pulver und durch Trocknen und Zerkleinern zu einem Pulver, worin bis zu 80% der Teilchen eine Grösse von <0.003 mm und bis zu 10% der Teilchen eine Grösse von > 0.05 mm aufweist, welches chemisch einheitlich und hygroskopisch ist.

## Revendications

1. La composition de phosphate de fer comprenant une solution d'acide orthophosphorique, de l'oxyde de fer (III), de la poudre métallique, et de l'eau, **caractérisée en ce que** la composition comprend du calcium et de l'acide citrique.

2. La composition selon la revendication 1, dans laquelle la quantité d'ingrédients dans la solution, mésurée en parties en poids, est la suivante :
| | |
|---|---|
| solution à 85% de l'acide orthophosphorique | 100 |
| oxyde de fer (III) | de 10 à 19 |
| poudre métallique | de 1,1 à 1,8 |
| eau | de 8 à 30 |
| calcium | de 1 à 3 |
| acide citrique | de 0,5 à 1,8. |

3. La composition selon la revendication 2, comprenant de la poudre métallique en parties en poids de 1,1 à 1,6.

4. La composition selon les revendications 1 à 3, dans laquelle ladite poudre métallique est choisie dans le groupe consistant en Al, Zn et Mg.

5. La composition selon les revendications 1 à 3, dans laquelle ladite poudre métallique est une poudre d'Al.

6. Le procédé de production d'une composition de phosphate de fer selon les revendications 1 à 5, consistant en un versement d'une solution à 85% de l'acide orthophosphorique dans un réacteur, une addition de l'oxyde de fer (III), ainsi qu'une addition de l'eau, de la poudre de métal, de l'acide citrique, et du calcium dans les 1 à 2 heures afin de contrôler la température nécessaire pour la réaction et pour neutraliser l'acidité.

7. L'utilisation de la composition selon l'une quelconque des revendications 1 à 5 pour la préparation de réactifs destinés pour le revêtement et l'imprégnation des matériaux choisis parmi le groupe consistant en le bois, le métal, le plastique, le papier, la pierre, le béton, et les textiles, afin de garantir la résistance au feu et les propriétés antiseptiques, selon laquelle ledit matériau est revêtu de ladite composition en ayant recours, au moins une fois, à une imprégnation sous vide, à un pinceau, à un pulvérisateur, ou à un rouleau de peinture.

8. L'utilisation de la composition selon l'une quelconque des revendications 1 à 5 pour la préparation des solutions de protection contre l'incendie et des solutions anticorrosives, des émulsions, des mastics, et des matières plastiques.

9. L'utilisation de la composition selon la revendication 8, dans laquelle la solution de protection contre l'incendie comprend de 5 à 35% des résines ou des adhésifs non inflammables.

10. L'utilisation de la composition selon la revendication 7 pour la protection des métaux avec une solution anticorrosive comprenant de 5 à 35% des résines ou des adhésifs non inflammables, selon laquelle la surface est couverte d'une première couche pour transformer la rouille, suivie d'une seconde couche appliquée afin de former une couche protectrice sur la surface.

11. L'utilisation de la composition selon la revendication 8 pour la préparation d'une poudre par l'évaporation ou par la cristallisation de la composition et par l'addition des solvants organiques à la poudre, suivi d'un séchage et d'un broyage en poudre, dont jusqu'à 80% de particules sont d'une taille de <0,003 mm et jusqu'à 10 % de particules sont d'une taille de > 0,05 mm, avec l'ajout de 8 à 25% de ladite poudre au matériau en plastique, à son température de fusion, avant le moulage.

12. L'utilisation de la composition selon la revendication 7 pour créer une couche de protection sur ledit matériau contre l'action nuisible de l'environnement, en diluant la composition avec de l'eau dans un rapport en poids de 1:4, et en ajoutant d'une solution de 2 % à 5 % d'hydroxyde de sodium ou d'hydroxyde de potassium.

13. L'utilisation de la composition selon la revendication 7 pour la préparation d'un mastic permettant de fournir ou de rétablir des revêtements résistants au feu, pour lier les briques de chamotte, ainsi que pour la bardage en chamotte chez les éléments chauffants comme par exemple les chaudières, fours de verre, poêles et cheminées des habitations, car elle évite la surchauffe ainsi que le recuit du métal.

14. L'utilisation de la composition selon la revendication 13, dans laquelle la composition du dit mastic est la suivante (% en poids) :
| | |
|---|---|
| sable | 10 %, |
| argile | 56 %, |
| Al₂O₃ | 12 %, |
| solution à 20 % de ladite composition | 22 % |
tandis que la distribution des particules dans le mastic est la suivante :
< 0,4 mm - 1 %
< 0,09 mm - 2 %
et le procédé comprend l'ajout de l'eau en une quantité suffisante pour permettre l'application du mastic sur la surface à traiter.

15. Le procédé selon la revendication 6, comprenant la préparation de la composition en ayant recours à une réaction exothermique à la température allant de 120 à 130 °C, et la préparation d'une poudre par l'évaporation ou cristallisation du concentré, ainsi que par l'ajout des solvants organiques à la poudre, suivi d'un séchage et d'un broyage de la compostition en une poudre dont aux environs 80 % de particules sont d'une taille de < 0,003 mm et 10 % de particules sont de taille de > 0,05 mm, et qui soit chimiquement uniforme et hydroscopique.
